# EUROPÄISCHE PATENTSCHRIFT

(11) **EP 0 444 061 B1**
(45) Veröffentlichungstag und Bekanntmachung des Hinweises auf die Patenterteilung: **02.03.1994**
(21) Anmeldenummer: 89912226.1
(22) Anmeldetag: 11.11.1989
(51) Int. Cl.: F02P 7/02, F16B 39/24, H01R 4/64

(54) **ZÜNDVERTEILER FÜR BRENNKRAFTMASCHINEN**
IGNITION DISTRIBUTOR FOR INTERNAL COMBUSTION ENGINES
ALLUMEUR POUR MOTEURS A COMBUSTION INTERNE

(30) Priorität: 15.11.1988 DE 8814267 U
(43) Veröffentlichungstag der Anmeldung: 04.09.1991
(73) Patentinhaber: ROBERT BOSCH GMBH, 70442 Stuttgart (DE)
(72) Erfinder: BADER, Walter, W-7034 Gärtringen (DE)
(86) Internationale Anmeldenummer: DE8900708
(87) Internationale Veröffentlichungsnummer: WO9005850

(56) Entgegenhaltungen:
- DE-A- 3 101 931
- DE-U- 8 515 918

## Beschreibung

Die Erfindung geht aus von einem Zündverteiler für Brennkraftmaschinen nach der Gattung des Hauptanspruchs. Die Schirmung des Zündverteilers ist nur bei einwandfrei leitender Verbindung der Abschirmkappe mit der geerdeten Fahrzeugmasse gegeben. Es ist schon durch das DE-GM 85 15 918.2 ein Zündverteiler bekannt, bei dem an jeder Verschraubungsstelle, an der die Abschirmkappe mit der Verteilerkappe und diese mit dem Gehäuse des Zündverteilers und damit mit der Fahrzeugmasse verbunden ist, eine Scheibe eingesetzt ist, die mit ihrem äußeren Bereich in die Abschirmkappe eingespritzt ist und deren Innenbereich durch Stanzen hergestellte, aus der Ebene des Kontaktrings konisch ausgestellte Innenzähne aufweist. Die Masseverbindung der Abschirmkappe zum Gehäuse des Zündverteilers erfolgt dann, wenn bei der Befestigung der Verteilerkappe der Schraubenkopf jeweils den Innenteil der Scheibe zur Anlage an die eben ausgebildete eine Stirnseite der Buchse bringt und dort einspannt. Der bekannte Zündverteiler ist also zweiteilig ausgeführt und es müßte bei der Endmontage ein zusätzlicher Arbeitsvorgang eingeplant werden, wobei auf exakten Sitz der Abschirmkappe auf der Verteilerkappe, auf richtige Zuordnung der Scheiben zu den Buchsen und auf saubere Oberflächen geachtet werden muß, damit ein einwandfreie Masseverbindung erfolgt.

### Vorteile der Erfindung

Der erfindungsgemäße Zündverteiler mit den kennzeichnenden Merkmalen des Hauptanspruchs bat demgegenüber den Vorteil, daß der Kontaktring aus einer einfacheren Scheibe in Form einer Tellerfeder besteht, die in ihrem Innenbereich als ebene Scheibe ausgebildet ist und somit keine Lamellen mehr aufweist. Der Massekontakt zwischen Abschirmkappe und Buchse und damit zum Zündverteilergehäuse wird durch partielles plastisches Verformen der entsprechend ausgestalteten Buchse mit dem Innenbereich der Tellerfeder erreicht. Damit ist eine exakt fixierte Verbindung mit sehr gute Massekontakt erreicht, insbesondere, wenn die plastische Verformung punktförmig erfolgt und über die so erzielte hohe Flächenpressung eine hohe Kontaktsicherheit erreicht ist.

### Zeichnung

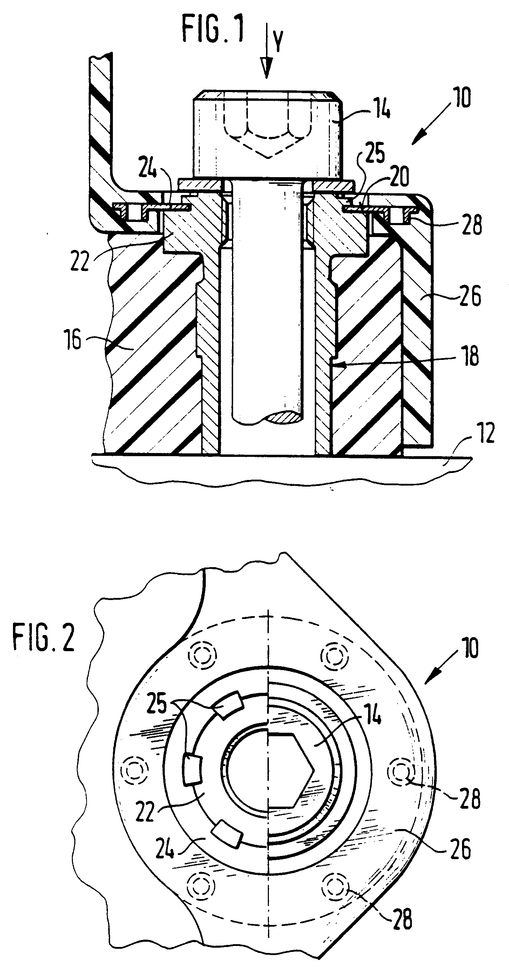

Die Erfindung ist in der Zeichnung anhand von zwei Figuren dargestellt und in der nachfolgenden Beschreibung näher erläutert. Es zeigen Figur 1 einen Längsschnitt durch einen Teil eines Zündverteilers und Figur 2 die Verbindungsstellen zwischen Buchse und Kontaktring in der Richtung des Pfeiles Y in Figur 1.

### Beschreibung des Ausfübrungsbeispieles

In der Zeichnung ist in Figur 1 ein Teilschnitt durch einen Zündverteiler 10 dargestellt, auf dessen Gehäuse 12 mit mehreren Kopfschrauben 14 eine Verteilerkappe 16 befestigt ist. Die aus Kunststoff gefertigte Verteilerkappe 16 weist im Bereich eines jeden Schraubendurchtritts eine zylindrische Buchse 18 auf, die als Einlegeteil mit der durch Kunststoffspritzen hergestellten Verteilerkappe formschlüssig verbunden ist. Die Buchse 18 trägt an ihrer dem Kopf der zugeordneten Kopfschraube zugewandten einen Stirnseite in radialer Erweiterung einen mit einer Schulter 20 versehenen Bund 22, auf dem der Innenabschnitt einer als Scheibe 24 ausgebildeten Tellerfeder aufliegt und durch eine Stufung 25 im Bund 22 teilweise abgedeckt ist. Der Außenabschnitt der Scheibe 24 ist als Einlegeteil mit einer durch Kunststoffspritzen hergestellten Abschirmkappe 26 formschlüssig verbunden, die die Verteilerkappe 16 abdeckt. Die Scheibe 24 hat in ihrem Außenabschnitt sechs Vorsprünge 28, die durch Ziehstanzen der Durchbrüche hergestellt sind; deren Richtung verläuft annähernd rechtwinklig zur Grundfläche der Scheibe 24. Mit diesen Vorsprüngen 28 wird die Scheibe 24 sicher in der Abschirmkappe 26 fixiert. Die Buchse 18 weist unterhalb des Bundes 22 im Bereich des Zylinderschafts einen zweiten Bund auf, über die wiedarum eine formschlüssige Verbindung mit der Verteilerkappe 16 hergestellt ist.

In Figur 2 ist die Buchse 18 im Bereich ihres Bundes 22 nach der erfindungsgemäßen Verbindung der Scheibe 24 gezeigt. Der Bund 22 ist dabei partiell durch plastische Verformungen so abgesenkt, daß in jeder dieser beaufschlagten Flächen eine Stufung 25 auftritt, die den darunterliegenden Außenbereich der Scheibe 24 fest gegen die Schulter 20 drückt und somit die Scheibe 24 mit der Buchse 18 verstammt. Hierdurch wird eine unlösbare Verbindung zwischen der aus elektrisch leitfähigem Kunststoff hergestellten Abschirmkappe 26 über den eingespritzten Außenbereich der Scheibe 24 und der Buchse 18 erzielt. Durch den über die Anpreßkräfte der Kopfschrauben 14 vermittelte Kontaktdruck wird die Buchse 18 gegen das Gehäuse 12 gedrückt und damit die Masseverbindung zwischen dar die Störstrahlung aufnehmendan Abschirmkappe 26 und dem Massepotential hergestellt. Die Scheibe 24, die federnd ausgebildet ist, kann bei dem Zusammenbau mit der Verteilerkappe 16 durch Verstemmen leicht verformt werden, so daß Toleransen der Bauteile ausgeglichen werden können.

## Patentansprüche

1. Zündverteiler (10) für Brennkraftmaschinen mit einer Verteilerkappe (16) aus Isolierstoff, die mindestens zwei Buchsen (18) aus elektrisch leitfähigem Material hat, mit einer die Verteilerkappe (16) bedeckenden Abschirmkappe (26) aus leitfähigem Material, in der jeweils ein Außenabschnitt mindestens zweier Lochscheiben (24) aus leitfähigem Werkstoff eingeformt ist, wobei der Außenabschnitt einer jeden Lochscheibe (24) mehrere Vorsprünge (28) aufweist, deren Achsen annähernd parallel zur Achse der Lochscheibe (24) sind, wobei jeweils ein Innenabschnitt der Lochscheibe (24) mit der Buchse (18) in elektrisch leitenden Kontakt bringbar ist, und mit mindestens zwei durch die Buchsen (18) hindurchgeführten Kopfschrauben (14) für die gemeinsame Befestigung der Abschirmkappe (26) und der Verteilerkappe (16) an einem masseführenden Gehäuse (12), wobei der Kopf einer jeden Kopfschraube (14) jeweils an die eine Stirnfläche der Buchse (18) drückt und diese mit ihrer anderen Stirnfläche gegen das Gehäuse (12) hält, dadurch gekennzeichnet, daß die Kontaktierung einer jeden Lochscheibe (24) mit der Buchse (18) als unlösbare Verbindung des Innenabschnitts der Lochscheibe (24) mit der Buchse (18) durch plastische Verformung erfolgt.

2. Zündverteiler nach Anspruch 1, dadurch gekennzeichnet, daß der Innenteil der Lochscheibe (24) an einer zur einen Seite weisenden Schulter (20) der Buchse (18) zur Anlage kommt und dort durch Verformung von Material aus einem die Schulter (20) innen begrenzten Teil der Buchse (18) fixiert wird.

3. Zündverteiler nach Anspruch 1 oder 2, dadurch gekennzeichnet, daß die Lochscheibe (24) als ebene Scheibe ausgebildet ist mit einem in der Radialebene zur Achse der Buchse (18) liegenden Innenteil.

4. Zündverteiler nach vorstehenden Ansprüchen, dadurch gekennzeichnet, daß die plastische Verformung punktförmig ausgebildet ist.

## Claims

1. Ignition distributor (10) for internal-combustion engines, with a distributor cap (16) made of insulating material, which has at least two bushes (18) made of electrically conductive material, with a screening cap (26) made of conductive material, which covers the distributor cap (16) and in which a respective outer portion of at least two perforated discs (24) made of conductive material is formed, the outer portion of each perforated disc (24) having a plurality of projections (28), the axes of which are approximately parallel to the axis of the perforated disc (24), a respective inner portion of the perforated disc (24) being capable of being brought into electrically conductive contact with the bush (18), and with at least two head screws (14), guided through the bushes (18), for the common fastening of the screening cap (26) and of the distributor cap (16) to an earthing housing (12), the head of each head screw (14) respectively pressing against one end face of the bush (18) and holding the latter with its other end face against the housing (12), characterized in that the contacting of each perforated disc (24) with the bush (18) takes place, as an unreleasable connection of the inner portion of the perforated disc (24) to the bush (18), as a result of plastic deformation.

2. Ignition distributor according to Claim 1, characterized in that the inner part of the perforated disc (24) comes to bear on a shoulder (20) of the bush (18), the said shoulder pointing to one side, and is fixed there as a result of the deformation of material from a part of the bush (18) limiting the shoulder (20) on the inside.

3. Ignition distributor according to Claim 1 or 2, characterized in that the perforated disc (24) is designed as a plane disc, with an inner part lying in the radial plane relative to the axis of the bush (18).

4. Ignition distributor according to the preceding claims, characterized in that the plastic deformation is punctiform.

## Revendications

1. Allumeur (10) pour moteurs à combustion interne comprenant un capuchon d'allumeur (16) en matière isolante avec au moins deux douilles (18) en matière conductrice d'électricité, un capuchon formant écran (26) recouvrant le capuchon d'allumeur (16), le capuchon formant écran étant en matière conductrice d'électricité, dans laquelle est intégré, chaque fois un segment extérieur d'au moins deux rondelles (24) en matière conductrice, le segment extérieur de chaque rondelle (24) ayant plusieurs saillies (28) dont les axes sont sensiblement parallèles à l'axe de la rondelle (24) et chaque fois un segment intérieur de la rondelle (24) peut être mis en contact conducteur d'électricité avec la douille (18) et au moins deux vis à tête (14) traversant les douilles (18) pour la fixation commune du capuchon formant écran (26) et du capuchon d'allumeur (16) sur un boîtier (12) de mise à la masse, la tête de chaque vis à tête (14) étant poussée chaque fois contre une surface frontale de la douille (18) et maintient celle-ci par l'autre surface frontale contre le boîtier (12), caractérisé en ce que la mise en contact de chaque rondelle (24) avec la douille (18) se fait comme liaison inamovible du segment intérieur de la rondelle (24) et de la douille (18) par déformation plastique.

2. Allumeur selon la revendication 1, caractérisé en ce que la partie intérieure de la rondelle (24) arrive en appui contre un épaulement (20) de la douille (18) tourné d'un côté et y est fixée par déformation de la matière d'une partie de la douille (18) délimitant intérieurement l'épaulement (20).

3. Allumeur selon la revendication 1 ou 2, caractérisé en ce que la rondelle (24) est une rondelle plane avec une partie intérieure située dans le plan radial par rapport à l'axe de la douille (18).

4. Allumeur selon les revendications précédentes, caractérisé en ce que la déformation plastique est réalisée ponctuellement.
